# EUROPEAN PATENT APPLICATION

(11) **EP 4 477 723 A1**
(43) Date of publication of application: **18.12.2024**
(21) Application number: 23853632.0
(22) Date of filing: 13.06.2023
(51) Int. Cl.: C09J 133/08, C09J 123/12, H01M 50/198, H01M 50/409, H01M 50/411

(54) **BINDER FOR SECONDARY BATTERY, PREPARATION METHOD THEREFOR, SECONDARY BATTERY, AND ELECTRICAL APPARATUS**

(30) Priority: 24.04.2023 CN 202310447245
(71) Applicant: Contemporary Amperex Technology (Hong Kong) Limited, Central, Central And Western District (HK)
(72) Inventor: LI, Lei, Ningde Fujian 352100 (CN); KANG, Haiyang, Ningde Fujian 352100 (CN); ZHENG, Yi, Ningde Fujian 352100 (CN); CHEN, Meihuang, Ningde Fujian 352100 (CN); LAI, Runhao, Ningde Fujian 352100 (CN); WANG, Peng, Ningde Fujian 352100 (CN); SUN, Chengdong, Ningde Fujian 352100 (CN)
(74) Representative: Gong, Jinping
(86) International application number: PCT/CN2023/099989
(87) International publication number: WO 2024/221564

(57) **Abstract**

The present application relates to the technical field of secondary batteries, and in particular to a binder for secondary batteries and a preparation method, a secondary battery, and an electrical apparatus thereof. The binder includes a core structure and a shell structure disposed on a surface of the core structure. The shell structure includes an acrylate copolymer, and the core structure comprises a rigid polymer. The rigid polymer has a crystallinity ranging from 32% to 94%. The binder with a core-shell structure includes the core structure of the rigid polymer. During cold pressing of a battery cell, the rigid polymer acts as a support, making a particle structure of the binder stable, that is, the rigid polymer acts as a support, resulting in an overall increase in the rigidity of the binder, thus improving the dimensional stability of the binder and preventing the binder from complete deformation during cold pressing of the battery cell, and increasing the hardness of the battery cell while improving a cold-pressing bonding force to the battery cell.

## Description

### Cross reference to related applications

The present application claims priority to Chinese Patent Application No. 202310447245.8, filed on April 24, 2023, which is incorporated herein by reference in its entirety.

### Technical Field

The present application relates to the technical field of secondary batteries, and in particular to a binder for secondary batteries and a preparation method, a secondary battery, and an electrical apparatus thereof.

### Background Art

With the rapid growth of portable electronic devices and electric vehicles, the demand for power batteries is also growing. Electrochemical performances of batteries are also of increasing concern.

At present, battery cells have the problem of opening, that is, a gap tends to form between an electrode plate and a separator, resulting in the poor cycling performance of batteries.

### Summary of the Invention

A main objective of the present application is to provide a binder, aiming to improve the bonding between an electrode plate and a separator, thereby improving battery performance.

To achieve the above objective, the present application provides a binder for secondary batteries. The binder includes a core structure and a shell structure disposed on a surface of the core structure. The shell structure includes an acrylate copolymer, the core structure includes a rigid polymer, and the rigid polymer has a crystallinity ranging from 32% to 94%.

The acrylate copolymer has a good adhesion, so the use of the acrylate copolymer allows for better bonding performance between the separator and the electrode plate after cold pressing.

The rigid polymer, with a crystallinity ranging from 32% to 94%, is featured by high strength, impact resistance, heat resistance, hardness and aging resistance. It is difficult for the rigid polymer to deform during cold pressing of a battery cell. It is to be understood that no or less deformation of the rigid polymer occurs during cold pressing.

The binder with a core-shell structure includes the core structure of the rigid polymer. During cold pressing of the battery cell, the rigid polymer acts as a support, making a particle structure of the binder stable, that is, the rigid polymer acts as a support, resulting in an overall increase in the rigidity of the binder, thus improving the dimensional stability of the binder and preventing the binder from complete deformation during cold pressing of the battery cell, and increasing the hardness of the battery cell while improving a cold-pressing bonding force to the battery cell.

It is to be understood that, without a core layer of the rigid polymer as a support, the probability of the binder being crushed is increased and pores of the binder are compressed and blocked when the binder is crushed, which is not conducive to electrolyte penetration and ion transport.

Due to the difficulty of deformation of the rigid polymer, the binder is allowed to maintain a certain shape during cold pressing, thus solving the problem blocking the pores between the binder particles due to deformation of the binder when the binder is crushed.

Since the binder of the present application is supported by the rigid polymer, particles of the binder are less prone to full deformation, and thus the pores between the particles of the binder are prevented from being blocked. These unblocked pores become channels for electrolyte infiltration and facilitate ion transport, while improving the hardness of the battery cell, improving kinetic performance of a secondary battery, reducing electrochemical impedance and improving cycling performance of the secondary cell.

It is to be understood that during cold pressing of the battery cell, the core structure of the binder does not undergo deformation or undergoes less deformation, thereby reducing the probability of the binder particles being crushed; the shell structure includes the acrylate copolymer, and the acrylate copolymer can provide a better adhesion, improving the cold pressing bonding force of the battery cell. It is to be understood that during cold pressing, the acrylate copolymer in the shell structure is deformed by a squeezing pressure, which allows the shell structure to be inserted into a gap between the separator and the electrode plate, thus improving the bonding force.

Optionally, the rigid polymer has a crystallinity ranging from 40% to 80%.

In order to improve the hardness of the rigid polymer, preferably, the rigid polymer has a crystallinity greater than or equal to 40%. Moreover, too high a crystallinity makes the process difficult to achieve, and for this reason, preferably, the rigid polymer has a crystallinity less than or equal to 80%.

Optionally, the rigid polymer includes at least one of polyethylene, polypropylene, polystyrene, polymethyl methacrylate, and polyamide.

The rigid polymer includes commonly used engineering plastics, which are industrial plastics used as industrial parts or shell materials and have good strength, impact resistance, heat resistance, hardness and aging resistance. For example, the rigid polymer includes at least one of polyethylene, polypropylene, polystyrene, polymethyl methacrylate and polyamide. The rigid polymer of the present application may be selected from those listed above or, of course, from other rigid polymers not listed in the present application. Engineering plastics have a high crystallinity, generally ranging from 32% to 94%. The above-mentioned rigid polymer is used as the core structure, which is conducive to improving cold pressing performance of the binder.

Optionally, the shape of the binder includes a spherical shape.

The spherical shape facilitates uniform dispersion during slurry mixing, thus facilitating uniform coating.

Optionally, the binder has a volume particle size distribution Dv50 of 1 µm to 15 µm, and preferably, the binder has a volume particle size distribution Dv50 of 1 µm to 12 µm.

In order to improve passability of lithium ions (taking a lithium-ion battery as an example, but of course other types of secondary batteries are also possible) on the separator, as well as to improve energy density of the battery, the binder has a volume particle size distribution Dv50 of 1 µm to 15 µm, preferably 1 µm to 12 µm.

Optionally, a ratio of a volume particle size distribution Dv50 of the acrylate copolymer to a volume particle size distribution Dv50 of the rigid polymer is 1 :(1-50).

In order to provide the acrylate copolymer effectively on the surface of the core structure to form the core-shell structure, the acrylate copolymer has a volume particle size distribution Dv50 less than the volume particle size distribution Dv50 of the rigid polymer. Specifically, the ratio of the volume particle size distribution Dv50 of the acrylate copolymer to the volume particle size distribution Dv50 of the rigid polymer is 1 :(1-50).

Optionally, the rigid polymer has a volume particle size distribution Dv50 of 0.1 µm to 5 µm, and preferably, the rigid polymer has a volume particle size distribution Dv50 of 0.5 µm to 2 µm;
and/or, the acrylate copolymer has a volume particle size distribution Dv50 of 100 nm to 200 nm, and preferably, the acrylate copolymer has a volume particle size distribution Dv50 of 130 nm to 180 nm. It is to be understood that in order to obtain the binder with the core-shell structure, and to improve the adhesion of the binder, the rigid polymer has a volume particle size distribution Dv50 of 0.1 µm to 5 µm, preferably 0.5 µm to 2 µm, and the acrylate copolymer has a volume particle size distribution Dv50 of 100 nm to 200 nm, preferably 130 nm to 180 nm.

It is to be understood that the binder with the core-shell structure may be either a shell structure completely covering the core structure or a shell structure not completely covering the shell structure.

Optionally, a ratio of mass of the shell structure to mass of the core structure is 1:(0.1-10), and preferably a ratio of mass of the shell structure to mass of the core structure is 1:(0.1-5).

In order to solve the problem of reduced adhesion of the binder caused by excessive mass of the rigid polymer, and to solve the problem of reduced overall hardness of the binder caused by too little mass of the rigid polymer, which affects the subsequent performance of the battery cell, the ratio of the mass of the shell structure to the mass of the core structure is 1:(0.1-10), and preferably, the ratio of the mass of the shell structure to the mass of the core structure of 1:( 0.1-5).

Optionally, the acrylate copolymer includes at least two of an acrylate monomer, an acrylonitrile monomer and an acrylamide monomer as constituent monomers.

The acrylate copolymer has a good adhesion, so the use of the acrylate copolymer allows for better bonding performance between the separator and the electrode plate after cold pressing.

It is to be understood that, the acrylate monomer can improve the anti-swelling capacity of a polymer, and act as a flexible monomer chain segment in a molecular chain segment to be capable of regulating the glass transition temperature of the polymer, thereby improving toughness of the binder when applied and facilitating a good bonding effect. The acrylonitrile monomer with a strong-polar cyano group is conducive to improving the ionic conductivity. The acrylamide monomer plays a role in regulating molecular weight.

The adhesion performance of the acrylate copolymer is better when its constituent monomers include two of the acrylate monomer, the acrylonitrile monomer and the acrylamide monomer, and even better when all three monomers are included.

Optionally, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobomyl methacrylate, lauryl methacrylate, 2-hydroxyethyl methacrylate, and 2-hydroxypropyl methacrylate;
and/or, the acrylonitrile monomer comprises at least one of acrylonitrile or methacrylonitrile;
and/or, the acrylamide monomer comprises at least one of acrylamide, N-hydroxymethylacrylamide and N-butoxymethylacrylamide.

The use of any one or more of the above acrylate monomers allows for the adjustment of the glass transition temperature of the polymer and improves the anti-swelling capacity of the polymer. The above is an example of the acrylate monomer. The acrylate monomer used in the present application may be a substance listed above or another acrylate monomer other than that used in the present application.

The ionic conductivity of the binder can be improved by using any one or more of the above acrylonitrile monomers. The above is an example of the acrylonitrile monomer. The acrylonitrile monomer used in the present application may be a substance listed above or another acrylonitrile monomer other than that used in the present application.

The use of any one or more of the acrylamide monomers above may regulate the molecular weight of the polymer and regulate the molecular weight of the binder. The molecular weight of the binder is within a certain range, which helps to improve the adhesion. The above is an example of the acrylamide monomer. The acrylamide monomer used in the present application may be a substance listed above or another acrylamide monomer other than that used in the present application.

Optionally, the acrylate copolymer includes an acrylate monomer, an acrylonitrile monomer and an acrylamide monomer as constituent monomers, the acrylate monomer, the acrylonitrile monomer and the acrylamide monomer have a mass ratio of 1:(0.01-0.8):(0.01-0.15), and preferably, the acrylate monomer, the acrylonitrile monomer and the acrylamide monomer have a mass ratio of 1:(0.1-0.6):(0.06-0.12).

As the mass ratio of the three monomers mentioned above is controlled within the above range, both the molecular weight and glass transition temperature of the polymer can be controlled, thus improving the adhesion performance of the binder.

The present application further provides a preparation method of a binder for secondary batteries, including:
preparing an acrylate copolymer emulsion; and
blending the acrylate copolymer emulsion with a rigid polymer and performing spray drying to obtain a binder with a core-shell structure.

The acrylate copolymer emulsion is prepared by emulsion polymerization, and the acrylate copolymer emulsion is blended with the rigid polymer and subjected to spray drying to obtain the binder with the core-shell structure.

In spray drying, the acrylate copolymer with a small particle size is viscous and can adhere onto and cover the surface of the rigid particles that are not viscous on the surface so as to form the core-shell structure.

In the step of forming the binder with the core-shell structure, the spray drying allows for better covering effect of the acrylate copolymer on rigid particles as compared with an emulsion polymerization method. Moreover, it is not easy to control a polymerization step in the emulsion polymerization process, in other words, the binder with the core-shell structure, prepared by the spray drying process, has better adhesion performance.

In the spray drying process, the shell structure is formed by accumulation of spherical granular particles on the surface of the core structure. The spherical particles are in point contact with each other, allowing the formation of channels and voids in a shell layer, thus facilitating the electrolyte infiltration. Due to the support of the core structure, the probability of the binder particles being crushed during cold pressing is reduced. In this way, the possibility of the channels and voids in the shell layer being crushed and blocked is reduced, and porosity of the binder layer is increased, allowing an electrolyte solution to penetrate inside the binder through the gap between particles of the acrylate copolymer.

Moreover, some of rigid polymer materials have rich functional groups on their surface, which can improve electrolyte infiltration, accelerate ion transport and improve electrochemical performance of the battery. For example, the rigid polymer composed of polymethyl methacrylate has an ester group, which can enhance the infiltration of solvents in the electrolyte solution, the solvents in the electrolyte solution including such as ethylene carbonate, propylene carbonate, and ethyl methyl carbonate.

Optionally, the step of preparing an acrylate copolymer emulsion includes:
stirring and emulsifying water, an emulsifier and constituent monomers of the acrylate copolymer to obtain a pre-emulsion of monomers; and
stirring the emulsifier and the water to emulsify, adding the pre-emulsion and an initiator under a heating condition, and raising the temperature to obtain the acrylate copolymer emulsion.

In the step of preparing an acrylate copolymer emulsion, a step of pre-emulsification followed by a polymerization reaction is used, resulting in more uniform mixing of monomers and more homogeneous acrylate copolymer particles with more stable performance.

The present application further provides a separator, the separator including a base film and a binder layer disposed on at least one side of the base film, the binder layer including the binder for secondary batteries described above;
or the binder layer including a binder prepared by the preparation method of a binder for secondary batteries described.

The present application further provides a secondary battery, the secondary battery including the separator described.

The present application further provides an electrical apparatus, the electrical apparatus including the secondary battery described.

### Description of Drawings

To describe the technical solutions in the embodiments of the present application or in the prior art more clearly, the following briefly describes the accompanying drawings required for describing the embodiments or the prior art. Apparently, the accompanying drawings in the following description show merely some of the embodiments of The present application, and a person of ordinary skill in the art may still derive other drawings from the structures illustrated in these accompanying drawings without creative efforts.

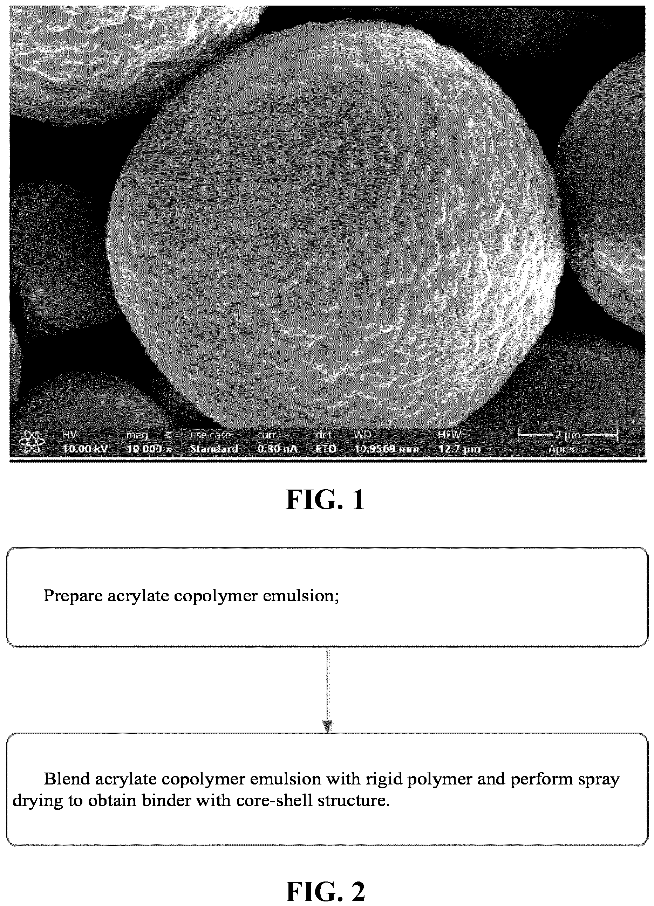

Fig. 1 a scanning electron micrograph of a binder in Example 1 of the present application;
Fig. 2 is a flow chart of a preparation method of a binder according to an embodiment of the present application;
Fig. 3 is a schematic diagram of a secondary battery according to an embodiment of the present application;
Fig. 4 is an exploded view of the secondary battery according to an embodiment of the present application shown in Fig. 3;
Fig. 5 is a schematic diagram of a battery module according to an embodiment of the present application;
Fig. 6 is a schematic diagram of a battery pack according to an embodiment of the present application;
Fig. 7 is an exploded view of the battery pack according to an embodiment of the present application shown in Fig. 6; and
Fig. 8 is a schematic diagram of an electrical apparatus using a secondary battery as a power source according to an embodiment of the present application.

### Description of reference numerals:

| No. | Name | No. | Name |
|---|---|---|---|
| 1 | Battery pack | 5 | Secondary battery |
| 2 | Upper box body | 51 | Case |
| 3 | Lower box body | 52 | Electrode assembly |
| 4 | Battery module | 53 | Top cover assembly |

The implementation of the objective, functional features and advantages of the present application will be further described in combination with embodiments and with reference to the accompanying drawings.

### Detailed Description

The following clearly and completely describes technical solutions in some embodiments of The present application with reference to the accompanying drawings in some embodiments of The present application. Apparently, the described embodiments are only some but not all of the embodiments of The present application. Based on the examples in the present application, all other examples obtained by those of ordinary skill in the art without creative effort fall within the protection scope of the present application.

The following specifically discloses in detail embodiments of a binder and a preparation method thereof, a separator comprising the binder, an electrode assembly, a battery cell, a battery, and an electrical apparatus of the present application, with appropriate reference to the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

The battery cells have the problem of openings, that is, a gap tends to form between an electrode plate and a separator, resulting in the poor cycling performance of batteries.

For example, polyvinylidene fluoride, as the most commonly used binder, has been widely used in separators, but at this stage polyvinylidene fluoride is costly. A polyvinylidene fluoride polymer is coated on the surface of a separator of a secondary battery, so that the problem of high-temperature shrinkage of the separator is partially solved. A battery cell is cold pressed after winding, but conventional polyvinylidene fluoride is a homopolymer with a crystallinity of about 50%, resulting in an insufficient bonding force to positive and negative electrode plates, often causing the problem of battery cell openings, and therefore it is impossible to meet the demand for performance of a coated separator in a secondary traction battery.

In other words, by coating the polyvinylidene fluoride polymer on the surface of the separator of the battery, the problem of high-temperature shrinkage of the separator can be solved partially; The battery cell is cold pressed after winding, but because the conventional polyvinylidene fluoride is a homopolymer with a crystallinity of about 50%, the bonding force to the positive and negative electrode plates is insufficient, often causing the problem of battery cell openings. A opening in the battery cell leads to a gap between the electrode plate and the separator, making a loose overall structure of the battery cell, which reduces the hardness of the battery cell and leads to a poor cycling performance of the battery cell.

The battery cell is formed by bonding the positive and negative electrode plates to the separator and has a certain hardness. In other words, the bonded positive and negative electrode plates and the separator attached to and support each other to form a structure with a certain thickness, which has a certain hardness. A negative electrode may expand during charging and discharging. If the bonding force is weak, a gap will be formed between the positive and negative electrode plates and the separator, and the positive and negative electrode plates and the separator cannot adhere to and support each other, thus making the battery cell loose in structure and low in hardness. In this case, the power performance of the battery cell deteriorates, for example, the rate performance is reduced while the cycling performance deteriorates. For example, in an electric vehicle, a loose battery cell leads to a slower charging rate and poorer cycling performance, which directly leads to a shorter battery life and the need for frequent battery replacement in the electric vehicle, thus increasing the cost to consumers of the electric vehicle.

Based on this, the present application provides a binder for secondary batteries. The binder includes a core structure and a shell structure disposed on a surface of the core structure. The shell structure includes an acrylate copolymer, the core structure includes a rigid polymer, and the rigid polymer has a crystallinity ranging from 32% to 94%.

A binder is a material with adhesion performance and used to bond different substances together.

A core-shell structure is a structure consisting of a core in the center and a shell covering outside.

A core structure of the core-shell structure is located in the interior and is a structure covered with the shell outside.

A shell structure of the core-shell structure is a structure located outside and covering the surface of the core structure.

The core-shell structure can be observed through a transmission electron microscope. Specifically, due to different materials of the core-shell structure, there is a brightness difference (mass-thickness contrast) between the shell structure part and the core structure part in a transmission electron micrograph. The mass-thickness contrast is the difference in contrast caused by the difference in thickness and mass of different regions of the surface of a sample. As each part of the sample has a different electron scattering power, the number of transmitted electrons passing through an objective lens varies, and thus the electro-beam intensity varies. Regions with strong scattering power and few transmitted electrons are imaged darkly and vice versa.

An acrylate copolymer is a polymer produced by copolymerization of an acrylate monomer and other copolymer monomers.

The acrylate monomer has an acrylate group in its structure, for example, methyl acrylate, ethyl acrylate, and n-butyl acrylate.

The acrylate copolymer has a good adhesion, so the use of the acrylate copolymer allows for better bonding performance between the separator and the electrode plate after cold pressing.

Crystallinity is used to indicate the proportion of crystalline regions in a polymer, where crystallization is an orderly arrangement of molecular chains.

The crystallinity can be measured by a DSC (Differential Scanning Calorimetry) method. For example, a method for testing the crystallinity of polypropylene is that the crystallinity is tested by the DSC method, where a uniform value of heat of fusion ΔH0 for full crystallization of the polymer is used to minimize the effect on testing results of a sample. The procedure is as follows: place 5 mg of sample in a differential scanning calorimeter (Differential Scanning Calorimeter (DSC): Model SDT2960, TA, USA) under nitrogen protection at a flow rate of 20 mL/min, raise the temperature from room temperature to 210°C at 15°C/min, thermostat for 5 min to eliminate the thermal history and then reduce the temperature to room temperature at a rate of 5°C/min. Record the process, and calculate the crystallinity.

The rigid polymer, with a crystallinity ranging from 32% to 94%, is featured by high strength, impact resistance, heat resistance, hardness and aging resistance. For example, the rigid polymer includes polyethylene, and polypropylene. The rigid polymer is lighter in specific gravity than inorganic particles and can increase energy density of the battery.

It is difficult for the rigid polymer to deform during cold pressing of a battery cell. It is to be understood that no or less deformation of the rigid polymer occurs during cold pressing. It is to be understood that the pressure during cold pressing ranges from 1 MPa to 10 MPa, within which no or less deformation of the rigid polymer occurs.

The binder with a core-shell structure includes the core structure of the rigid polymer. During cold pressing of the battery cell, the rigid polymer acts as a support, making a particle structure of the binder stable, that is, the rigid polymer acts as a support, resulting in an overall increase in the rigidity of the binder, thus improving the dimensional stability of the binder and preventing the binder from complete deformation during cold pressing of the battery cell, and increasing the hardness of the battery cell while improving a cold-pressing bonding force to the battery cell.

It is to be understood that, without a core layer of the rigid polymer as a support, the probability of the binder being crushed is increased and pores of the binder are compressed and blocked when the binder is crushed, which is not conducive to electrolyte penetration and ion transport.

Due to the difficulty of deformation of the rigid polymer, the binder is allowed to maintain a certain shape during cold pressing, thus solving the problem blocking the pores between the binder particles due to deformation of the binder when the binder is crushed.

Since the binder of the present application is supported by the rigid polymer, particles of the binder are less prone to full deformation, and thus the pores between the particles of the binder are prevented from being blocked. These unblocked pores become channels for electrolyte infiltration and facilitate ion transport, while improving the hardness of the battery cell, improving kinetic performance of a secondary battery, reducing electrochemical impedance and improving cycling performance of the secondary cell.

It is to be understood that during the cold pressing of the battery cell, the core structure of the binder does not undergo deformation or undergoes less deformation, thereby reducing the probability of the binder particles being crushed; the shell structure includes the acrylate copolymer, and the acrylate copolymer can provide a better adhesion, improving the cold pressing bonding force to the battery cell.

In the above range of 32% to 94%, the values taken include the minimum and maximum values of the range, and each value between such minimum and maximum values, and specific examples include, but are not limited to, point values in embodiments, 32%, 35%, 40%, 45%, 50%, 55%, 60%, 65%, 70%, 75%, 80%, 85%, 90%, 94%, etc., and range values between any two of the above-mentioned point values.

In an embodiment, the rigid polymer has a crystallinity ranging from 40% to 80%.

In order to improve the hardness of the rigid polymer, preferably, the rigid polymer has a crystallinity greater than or equal to 40%. Moreover, too high a crystallinity makes the process difficult to achieve, and for this reason, preferably, the rigid polymer has a crystallinity less than or equal to 80%.

The values taken from 40% to 80% above include the minimum and maximum values of the range, and each value between such minimum and maximum values, and specific examples include, but are not limited to, point values in the embodiments, 40%, 45%, 50%, 55%, 60%, 65%, 70%, 75%, 80%, etc., and range values between any two of the above-mentioned point values.

In an embodiment, the rigid polymer includes at least one of polyethylene, polypropylene, polystyrene, polymethyl methacrylate, and polyamide.

The rigid polymer includes commonly used engineering plastics, which are industrial plastics used as industrial parts or shell materials and have good strength, impact resistance, heat resistance, hardness and aging resistance. For example, the rigid polymer includes at least one of polyethylene, polypropylene, polystyrene, polymethyl methacrylate and polyamide. The rigid polymer of the present application may be selected from those listed above or, of course, from other rigid polymers not listed in the present application. Engineering plastics have a high crystallinity, generally ranging from 32% to 94%. The above-mentioned rigid polymer is used as the core structure, which is conducive to improving cold pressing performance of the binder.

In an embodiment, the shape of the binder includes a spherical shape.

The spherical shape facilitates uniform dispersion during slurry mixing, thus facilitating uniform coating.

In an embodiment, the binder has a volume particle size distribution Dv50 of 1 µm to 15 µm, and preferably, the binder has a volume particle size distribution Dv50 of 1 µm to 12 µm.

For Dv50, the particle size of 50% of the total volume of sample particles is greater than this value, and the particle size of the other 50% of the total volume of the particles is less than this value. Dv50 can indicate the median particle size of the sample.

The volume particle size distribution Dv50 of the binder can be tested using methods well known in the art. As an example, reference can be made to GB/T 19077-2016 and characterization tests can be carried out using a Malvern laser particle size analyzer, for example using an instrument such as Malvern Mastersizer-3000.

In order to improve passability of lithium ions (taking a lithium-ion battery as an example, but of course other types of secondary batteries are also possible) on the separator, as well as to improve energy density of the battery, the binder has a volume particle size distribution Dv50 of 1 µm to 15 µm, preferably 1 µm to 12 µm.

In the above range of 1 µm to 15 µm, the values taken include the minimum and maximum values of the range, and each value between such minimum and maximum values, and specific examples include, but are not limited to, point values in the embodiments, 1 µm, 2 µm, 3 µm, 4 µm, 5 µm, 6 µm, 7 µm,8 µm, 9 µm, 10 µm, 11 µm, 12 µm, 13 µm, 14 µm, 15 µm, etc., and range values between any two of the above-mentioned point values.

In the above range of 1 µm to 15 µm, the values taken include the minimum and maximum values of the range, and each value between such minimum and maximum values, and specific examples include, but are not limited to, point values in the embodiments, 1 µm, 2 µm, 3 µm, 4 µm, 5 µm, 6 µm, 7 µm, 8 µm, 9 µm, 10 µm, 11 µm, 12 µm, etc., and range values between any two of the above-mentioned point values.

Theoretically, the volume particle size distribution Dv50 of the acrylate copolymer in the binder and the volume particle size distribution Dv50 of the rigid polymer can be obtained by measurements using a projection electron microscope and a scanning electron microscope.

The size of the core structure can be measured from a binder image obtained by the projection electron microscope and the size of shell particles can be measured from an image obtained by the scanning electron microscope.

In an embodiment, a ratio of a volume particle size distribution Dv50 of the acrylate copolymer to a volume particle size distribution Dv50 of the rigid polymer is 1:(1-50).

In order to provide the acrylate copolymer effectively on the surface of the core structure to form the core-shell structure, the acrylate copolymer has a volume particle size distribution Dv50 less than the volume particle size distribution Dv50 of the rigid polymer. Specifically, the ratio of the volume particle size distribution Dv50 of the acrylate copolymer to the volume particle size distribution Dv50 of the rigid polymer is 1 :(1-50).

In the above ratio of 1: (1-50), the values taken include the minimum and maximum values of the range, and each value between such minimum and maximum values, and specific examples include, but are not limited to, point values in the embodiments, 1:1, 1:5, 1:10, 1:15, 1:20, 1:25, 1:30, 1:35, 1:40, 1:45, 1:50, etc., and range values between any two of the above-mentioned point values.

In an embodiment, the rigid polymer has a volume particle size distribution Dv50 of 0.1 µm to 5 µm, and preferably, the rigid polymer has a volume particle size distribution Dv50 of 0.5 µm to 2 µm; and/or, the acrylate copolymer has a volume particle size distribution Dv50 of 100 nm to 200 nm, and preferably, the acrylate copolymer has a volume particle size distribution Dv50 of 130 nm to 180 nm.

It is to be understood that in order to obtain the binder with the core-shell structure, and to improve the adhesion of the binder, the rigid polymer has a volume particle size distribution Dv50 of 0.1 µm to 5 µm, preferably 0.5 µm to 2 µm, and the acrylate copolymer has a volume particle size distribution Dv50 of 100 nm to 200 nm, preferably 130 nm to 180 nm.

In the above range of 0.1 µm to 5 µm, the values taken include the minimum and maximum values of the range, and each value between such minimum and maximum values, specific examples include, but are not limited to, point values in the embodiments, values of 0.1 µm, 0.5 µm, 1 µm, 1.5 µm, 2 µm, 2.5 µm, 3 µm, 3.5 µm, 4 µm, 4.5 µm, 5 µm, etc., and range values between any two of the above-mentioned point values.

In the above range of 0.5 µm to 2 µm, the values taken include the minimum and maximum values of the range, and each value between such minimum and maximum values, and specific examples include, but are not limited to, point values in the embodiments, values of 0.5 µm, 0.7 µm, 0.9 µm, 1 µm, 1.2 µm, 1.4 µm, 1.5 µm, 1.7 µm, 1.9 µm, 2 µm, etc., and range values between any two of the above-mentioned point values.

In the above range of 100 nm to 200 nm, the values taken include the minimum and maximum values of the range, and each value between such minimum and maximum values, and specific examples include, but are not limited to, point values in the embodiments, 100 nm, 110 nm, 120 nm, 130 nm, 140 nm, 150 nm, 160 nm, 170 nm, 18 nm, 190 nm, 200 nm, etc., and range values between any two of the above-mentioned point values.

In the above range of 130 nm to 180 nm, the values taken include the minimum and maximum values of the range, and each of the values between such minimum and maximum values, specific examples include, but are not limited to, point values in the embodiments, 130 nm, 140 nm, 150 nm, 160 nm, 170 nm, 18 nm, etc., and range values between any two of the above-mentioned point values.

It is to be understood that the binder with the core-shell structure may have the shell structure completely covering the core structure or the shell structure not completely covering the shell structure, without any specific limitation.

In an embodiment, a ratio of mass of the shell structure to mass of the core structure is 1:(0.1-10), and preferably, a ratio of mass of the shell structure to mass of the core structure is 1:(0.1-5).

A mass ratio testing method is that during preparation of the binder, the mass of the rigid polymer put in the preparation process for preparing the core structure is recorded as m, and the mass of the acrylate copolymer used for preparing the shell structure is recorded as n, where the mass ratio of the core structure to the shell structure is m:n.

In order to solve the problem of reduced adhesion of the binder caused by excessive mass of the rigid polymer, and to solve the problem of reduced overall hardness of the binder caused by too little mass of the rigid polymer, which affects the subsequent performance of the battery cell, the ratio of the mass of the shell structure to the mass of the core structure is 1 :(0.1-10), preferably 1:( 0.1-5).

In the above ratio of 1:(0.1-10), the values taken include the minimum and maximum values of the range, and each value between such minimum and maximum values, and specific examples include, but are not limited to, point values in the embodiments, 1:0.1, 1:0.5, 1:1, 1:2, 1:3, 1:4, 1:5, 1:6, 1:7, 1:8, 1:9, 1:10, etc., and range values between any two of the above-mentioned point values.

In the above ratio of 1:(0.1-5), the values taken include the minimum and maximum values of the range, and each value between such minimum and maximum values, and specific examples include, but are not limited to, point values in the embodiments, 1:0.1, 1:1, 1:2, 1:3, 1:4, 1:5, etc., and range values between any two of the above-mentioned point values.

In an embodiment, the acrylate copolymer includes at least two of an acrylate monomer, an acrylonitrile monomer and an acrylamide monomer as constituent monomers.

The acrylate monomer includes an acrylate group in its structure, for example, having the structural formula 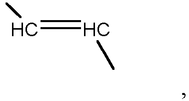 where R1 includes a hydrogen atom or an alkyl group of 1-12 carbon atoms and R2 includes an alkyl group of 1-12 carbon atoms. In an embodiment, the acrylate monomer includes methyl acrylate, ethyl acrylate, n-butyl acrylate and the like.

The acrylonitrile monomer has an unsaturated cyano group in its structure, for example, having the structural formula 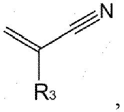 where R3 includes a hydrogen atom or an alkyl group of 1-6 carbon atoms. In an embodiment, the acrylonitrile monomer includes acrylonitrile, methacrylonitrile, and the like.

The acrylamide-like monomer includes an unsaturated amide group in its structure, for example, having the structural formula 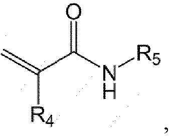 where R4 includes a hydrogen atom or an alkyl group of 1-6 carbon atoms and R5 includes a hydrogen atom, an alkyl group of 1-6 carbon atoms substituted with a hydroxyl group or an alkoxy group of 1-6 carbon atoms. In an embodiment, the acrylamide monomer includes acrylamide, N-hydroxymethylacrylamide, N-butoxymethylacrylamide, and the like.

It is to be understood that, the acrylate monomer can improve the anti-swelling capacity of a polymer, and act as a flexible monomer chain segment in a molecular chain segment to be capable of regulating the glass transition temperature of the polymer, thereby improving toughness of the binder when applied and facilitating a good bonding effect.

The acrylonitrile monomer with a strong-polar cyano group is conducive to improving the ionic conductivity.

The acrylamide monomer plays a role in regulating molecular weight.

The bonding performance of the acrylate copolymer is better when its constituent monomers include two of the acrylate monomer, the acrylonitrile monomer and the acrylamide monomer, for example, including the acrylate monomer and the acrylonitrile monomer, or including the acrylate monomer and the acrylamide monomer. The bonding performance is even better when all the above three monomers are included.

In an embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobomyl methacrylate, lauryl methacrylate, 2-hydroxyethyl methacrylate, and 2-hydroxypropyl methacrylate; and/or, the acrylonitrile monomer includes at least one of acrylonitrile or methacrylonitrile; and/or, the acrylamide monomer includes at least one of acrylamide, N-hydroxymethylacrylamide and N-butoxymethylacrylamide.

The use of any one or more of the above acrylate monomers allows for the adjustment of the glass transition temperature of the polymer and improves the anti-swelling capacity of the polymer. The above is an example of the acrylate monomer. The acrylate monomer used in the present application may be a substance listed above or another acrylate monomer other than that used in the present application.

The ionic conductivity of the binder can be improved by using any one or more of the above acrylonitrile monomers. The above is an example of the acrylonitrile monomer. The acrylonitrile monomer used in the present application may be a substance listed above or another acrylonitrile monomer other than that used in the present application.

The use of any one or more of the acrylamide monomers above may regulate the molecular weight of the polymer and regulate the molecular weight of the binder. The molecular weight of the binder is within a certain range, which helps to improve the adhesion. The above is an example of the acrylamide monomer. The acrylamide monomer used in the present application may be a substance listed above or another acrylamide monomer other than that used in the present application.

In an embodiments, the acrylate copolymer includes an acrylate monomer, an acrylonitrile monomer and an acrylamide monomer as constituent monomers, the acrylate monomer, the acrylonitrile monomer and the acrylamide monomer have a mass ratio of 1:(0.01-0.8):(0.01-0.15), and preferably, the acrylate monomer, the acrylonitrile monomer and the acrylamide monomer have a mass ratio of 1:(0.1-0.6):(0.06-0.12).

As the mass ratio of the three monomers mentioned above is controlled within the above range, both the molecular weight and glass transition temperature of the polymer can be controlled, thus improving the adhesion performance of the binder.

In the above ratio of 1:(0.01-0.8):(0.01-0.15), the values taken include the minimum and maximum values of the range, and each value between such minimum and maximum values, and specific examples include, but are not limited to, point values in the embodiments, 1:0.01:0.01, 1:0.1:0.01, 1:0.4:0.01, 1:0.8:0.01, 1. 0.01:0.05, 1:0.01:0.1, 1:0.01:0.15, 1:0.1:0.01, 1:0.1:0.05, 1:0.1:0.15, 1:0.4:0.01, 1:0.4:0.05, 1:0.4:0.15, 1:0.8:0.01, 1:0.8:0.05, 1:0.8: 0.15, etc., and range values between any two of the above-mentioned point values.

In the above ratio of 1:(0.1-0.6):(0.06-0.12), the values taken include the minimum and maximum values of the range, and each value between such minimum and maximum values, and specific examples include, but are not limited to, point values in the embodiments, 1:0.1: 0.06, 1:0.4: 0.06, 1:0.6:0.06, 1:0.1: 0.1, 1:0.1: 0.12, etc., and range values between any two of the above-mentioned point values.

In an embodiment, the present application further provides a preparation method of a binder for secondary batteries, including preparing an acrylate copolymer emulsion, and blending the acrylate copolymer emulsion with a rigid polymer and performing spray drying to obtain a binder with a core-shell structure.

The spray drying refers to that a material to be dried (a mixture of the acrylate copolymer emulsion and the rigid polymer) is dispersed into very fine mist-like particles by a mechanical action, the particles are allowed to be in contact with hot air (after the area of water evaporation is expanded to accelerate the drying process), then most of water is removed in an instant, so that solids in the material are dried into powder.

The binder with the core-shell structure is obtained by the spray drying process.

In spray drying, the acrylate copolymer with a small particle size is viscous and can adhere onto and cover the surface of the rigid particles that are not viscous on the surface so as to form the core-shell structure.

In the step of forming the binder with the core-shell structure, the spray drying allows for better covering effect of the acrylate copolymer on rigid particles as compared with an emulsion polymerization method. Moreover, it is not easy to control a polymerization step in the emulsion polymerization process, in other words, the binder with the core-shell structure, prepared by the spray drying process, has better adhesion performance.

In the spray drying process, the shell structure is formed by accumulation of spherical granular particles on the surface of the core structure. The spherical particles are in point contact with each other, allowing the formation of channels and voids in a shell layer, thus facilitating the electrolyte infiltration. Due to the support of the core structure, the probability of the binder particles being crushed during cold pressing is reduced. In this way, the possibility of the channels and voids in the shell layer being crushed and blocked is reduced, and porosity of the binder layer is increased, allowing an electrolyte solution to penetrate inside the binder through the gap between particles of the acrylate copolymer.

It is to be understood that, most traditional secondary battery separators are polyolefin separators, where multiple layers of separators have the function of blocking ion transport by closing pores at high temperature to ensure battery safety; a PP (polypropylene) layer on the surface of the separators further improves the resistance to oxidation of the separators; these multi-layer polyolefin composite separators improve the cycling performance and safety of the battery to a certain extent compared to traditional single-layer separators. However, the poor electrolyte infiltration and low thermal decomposition temperature of polyolefin separators remain, and accordingly the performance of multi-layer polyolefin separators is gradually unable to meet the growing needs of society.

The rigid polymer of the present application has a low density, excellent thermal and chemical stability. Moreover, some of rigid polymer materials have rich functional groups on their surface, which can improve electrolyte infiltration of the electrode solution, accelerate ion transport and improve electrochemical performance of the battery. For example, the rigid polymer composed of polymethyl methacrylate has an ester group, which can enhance the infiltration of solvents in the electrolyte solution, the solvents in the electrolyte solution including such as ethylene carbonate, propylene carbonate, and ethyl methyl carbonate.

In an embodiment, the step of preparing an acrylate copolymer emulsion includes stirring and emulsifying water, an emulsifier and constituent monomers of the acrylate copolymer to obtain a pre-emulsion of monomers; and stirring the emulsifier and the water to emulsify, adding the pre-emulsion and an initiator under a heating condition, and raising the temperature to obtain the acrylate copolymer emulsion.

A pre-emulsion is a solution obtained by pre-emulsifying a monomer. Emulsification is the effect of uniformly dispersing one liquid in very small droplets in another liquid that cannot dissolve with each other. Water, the emulsifier and the constituent monomers of the acrylate copolymer are co-mixed and stirred so that the constituent monomers of the acrylate copolymer are dispersed in water under the action of the emulsifier.

Emulsion polymerization refers to that with the help of the emulsifier and mechanical stirring, monomers are dispersed in water to form an emulsion, and then an initiator is added to initiate monomer polymerization.

Emulsifiers are a class of substances that can make mutually insoluble oil and water into an emulsion that is difficult to stratify. Emulsifiers are usually surfactants with a combination of properties of hydrophilic polar groups and hydrophobic (lipophilic) non-polar groups.

Initiators are substances that initiate a polymerization reaction with monomers. For example, radical initiators refer to a class of compounds that are readily decomposed by heat into radicals (i.e. primary radicals) and can be used to initiate radical polymerization and co-polymerization reactions of alkene and diene monomers.

In the step of preparing an acrylate copolymer emulsion, a step of pre-emulsification followed by a polymerization reaction is used, resulting in more uniform mixing of monomers and more homogeneous acrylate copolymer particles with more stable performance. This helps particles of the acrylate copolymer to be effectively provided on the core structure during the spray drying process.

It is to be understood that in a specific operation, two vessels may be used for testing. In the first vessel, water, an emulsifier, and constituent monomer of the acrylate copolymer are added and stirred to emulsify to obtain a pre-emulsion of monomers. In the second vessel, the emulsifier and water are added again and stirred to emulsify, the pre-emulsion and an initiator solution are added under a heating condition followed by raising the temperature, to obtain the acrylate copolymer emulsion.

For example, In an embodiment, the acrylate copolymer obtained by emulsion polymerization has a volume particle size distribution Dv50 of 0.1 µm and 0.11 µm, which is relatively uniform, and the rigid polymer has a volume particle size distribution Dv50 of about 1 µm ± 0.2 µm. The spray drying process enables the acrylate copolymer to be effectively bonded to the surface of the rigid polymer.

Embodiments of the present application further provide a separator, the separator including a base film and a binder layer disposed on at least one side of the base film, the binder layer including the binder for secondary batteries as described above; or the binder layer includes the binder prepared by the preparation method of a binder for secondary batteries as described above.

Embodiments of the present application further provide a secondary battery, the secondary battery including the separator as described above.

The secondary battery includes a battery module, a battery cell, a battery pack and other forms. When the secondary battery is a battery cell, the battery cell includes the separator as described above. When the secondary battery is a battery module, the battery module includes the separator as described above. When the secondary battery is a battery pack, the battery pack includes the separator as described above.

Embodiments of the present application further provide an electrical apparatus, the electrical apparatus including the secondary battery described above.

Moreover, the electrode assembly, battery cell, battery and electrical apparatus of the present application will be described hereafter with appropriate reference to the accompanying drawings.

In an embodiment of the present application, provided is an electrode assembly.

Generally, the electrode assembly includes a positive electrode plate, a negative electrode plate, an electrolyte, and a separator. During the charging and discharging process of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode while allowing ions to pass through. The separator is the separator described above in the present application.

The positive electrode plate includes a positive electrode current collector and a positive electrode film layer provided on at least one surface of the positive electrode current collector.

As an example, the positive-electrode current collector has two opposite surfaces in its own thickness direction, and the positive electrode film layer is arranged on either or both of the two opposite surfaces of the positive-electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminium, aluminium alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, when the electrode assembly is a lithium-ion battery, the positive electrode active material may be a positive electrode active material for lithium-ion batteries well known in the art. As an example, the positive active material may include at least one of the following materials: lithium-containing phosphate with olivine structure, lithium transition metal oxide, and their respective modified compounds. However, the present application is not limited to these materials, and other conventional materials useful as positive electrode active materials for batteries can also be used. It is possible to use only one of these positive active materials alone, or to use more than two in combination. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi0.₅Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate can be prepared by dispersing the components for preparing the positive electrode plate, for example, the positive electrode active material, the conductive agent, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode plate.

The negative electrode plate includes a negative-electrode current collector and a negative-electrode film layer arranged on at least one surface of the negative-electrode current collector, wherein the negative-electrode film layer includes a negative-electrode active material.

As an example, the negative electrode current collector has two opposite surfaces in its own thickness direction, and the negative electrode film layer is provided on either one or both of the two opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, a negative electrode active material for the battery well known in the art can be used as the negative electrode active material. As an example, the negative electrode active material may include at least one of artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, tin-oxygen compound, or tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally comprise other auxiliaries, for example, a thickener (e. g., sodium carboxymethyl cellulose (CMC-Na)) and the like.

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

The electrolyte serves to conduct ions between the positive electrode plate and the negative electrode plate. The type of the electrolyte is not particularly limited in the present application, and can be selected according to requirements.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate , lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, methylsulfonylmethane, ethyl methyl sulfone and ethyl sulfonyl ethane.

In some embodiments, the electrolyte solution may further optionally include an additive. For example, the additive may include a negative electrode film-forming additive, a positive electrode film-forming additive, and may also include additives that can improve certain battery properties, such as additives that improve battery overcharge performance, additives that improve battery high or low temperature performance, and the like.

In some embodiments, the electrode assembly further includes a separator. The type of the separator is not particularly limited in the present application, and any well-known separator with a porous structure having good chemical stability and mechanical stability may be selected.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a stacking process.

In some embodiments, the electrode assembly may include an outer package. The outer package can be used to encapsulate the above-mentioned electrode assembly and electrolyte.

In some embodiments, the outer package of the electrode assembly may be a hard shell, e.g., a hard plastic shell, an aluminum shell, a steel shell, etc. The outer package of the electrode assembly may also be a soft pack, such as a pouch. The material of the soft pack can be a plastic, and examples of the plastic include polypropylene, polybutylene terephthalate and polybutylene succinate, etc.

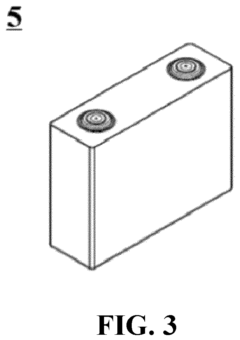

The present application has no particular limitation on the shape of the electrode assembly, which may be cylindrical, square or any other shape. For example, Fig. 3 shows a secondary battery 5 with a square structure as an example.

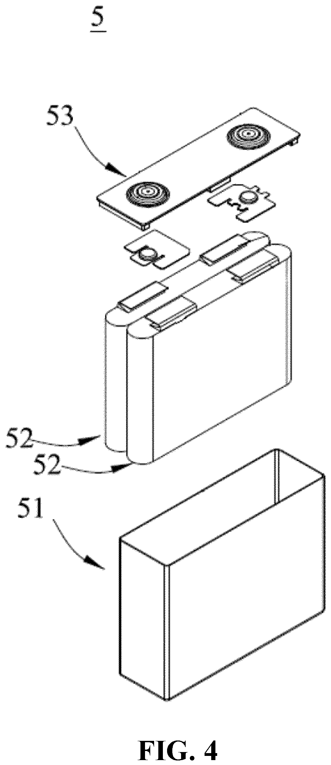

In some embodiments, referring to Fig. 4, the outer package may include a case 51 and a cover plate 53. Here, the case 51 may include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode plate, the negative electrode plate, and the separator may be formed into a secondary battery 52 by a winding process or a stacking process. The secondary battery 52 is encapsulated in the accommodating cavity. The electrolyte solution infiltrates the secondary battery 52. The number of secondary batteries 52 included in the secondary battery 5 may be one or more, which may be selected by those skilled in the art according to specific actual requirements.

In some embodiments, the electrode assemblies may be assembled into a battery module, the number of the electrode assemblies included in the battery module may be one or more, and the specific number may be selected by those skilled in the art according to the application and capacity of the battery module.

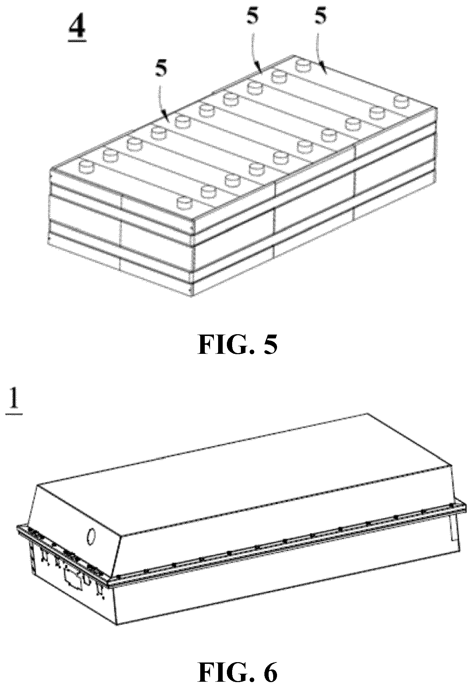

Fig. 5 shows a battery module 4 as an example. Referring to Fig. 5, in the battery module 4, multiple secondary batteries 5 may be sequentially arranged along a length direction of the battery module 4. Of course, any other arrangement is also possible. The plurality of secondary batteries 5 may further be fixed by fasteners.

Optionally, the battery module 4 can further include a shell having an accommodating space, in which the plurality of secondary batteries 5 are accommodated.

In some embodiments, the battery module may further be assembled into a battery pack, the number of battery module contained in the battery pack may be one or more, and the specific number can be selected by those skilled in the art according to the use and capacity of the battery pack.

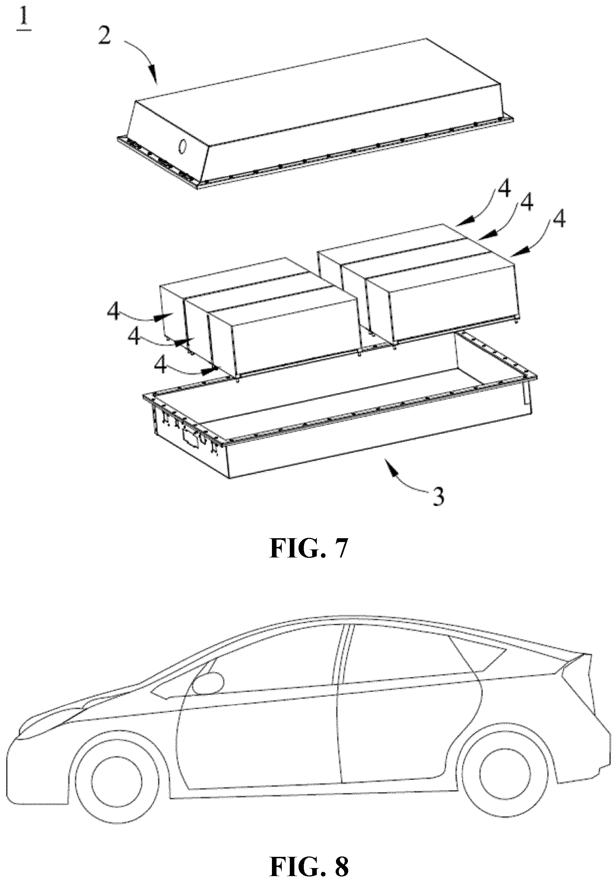

Figs. 6 and 7 show a battery pack 1 as an example. Referring to Figs. 6 and 7, the battery pack 1 may include a battery box and multiple battery modules 4 disposed in the battery box. The battery box includes an upper box body 2 and a lower box body 3, where the upper box body 2 can cover the lower box body 3 and forms an enclosed space for accommodating the battery module 4. The plurality of battery modules 4 may be arranged in the battery box in any manner.

In addition, the present application further provides an electrical apparatus, which includes at least one of the electrode assembly, the battery module, or the battery pack provided in the present application. The electrode assembly, the battery module or the battery pack may be used as a power source for the electrical apparatus or an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the electrode assembly, the battery module, or the battery pack may be selected according to its use requirements.

Fig. 8 is an example of an electrical apparatus. The electrical apparatus is a all-electric vehicle, a hybrid electric vehicle or a plug-in hybrid electric vehicle, and the like. In order to meet the requirements raised by the electrical apparatus for high power and high energy density of electrode assemblies, the battery pack or the battery module may be adopted.

As another example, the apparatus may be a mobile phone, a tablet, a laptop, etc. The apparatus is generally required to be light and thin, and can use an electrode assembly as a power source.

### Examples

Examples of the present application will be described hereinafter. The examples described below are exemplary and only used to explain the present application, and are not to be construed as limiting the present application. Where specific techniques or conditions are not specified in the examples, the techniques or conditions described in the literatures of the art or the product specifications are followed. Where manufacturers are not specified, the reagents or instruments used are conventional products and are commercially available.

### Example 1

### Preparation of acrylate copolymer

### Preparation Example 1

(1) 150 g of deionized water and 3.6 g of sodium dodecyl sulfonate were added to a 500 ml three-necked flask and stirred fully for 15 min to emulsify; 91.74 g of acrylate monomer (ethyl acrylate), 0.92 g of acrylonitrile monomer (acrylonitrile) and 7.34 g of acrylamide monomer (N-hydroxymethyl acrylamide) in a mass ratio of 1:0.01:0.08 with a total 100 g of monomers were sequentially added and stirred fully for 60min to obtain a pre-emulsion of the monomers, which was then taken out for later use.
(2) 100 ml of deionized water and 0.15 g of sodium dodecylbenzene sulfonate were added to a 500 ml three-necked flask, heated to 75°C, emulsified at 2000 r/min for 15 min to emulsify the system, then the pre-emulsion and an initiator solution (the solution formed by dissolving 0.2 g of potassium persulfate in 30 g of deionized water as an initiator) were added dropwise slowly, after dropwise adding was completed, the temperature was increased to 90°C and kept for reaction for 0.5 h, and then reduced to 40°C; the pH was adjusted to 7 with ammonia, stirring was stopped, followed by filtering and discharging to obtain an acrylate copolymer emulsion, where the acrylate copolymer emulsion had a volume particle size distribution Dv50 of 0.1µm ±0.01µm (the polymer of the shell structure in each example has a volume particle size distribution Dv50 of 0.1µm±0.01 µm).

### Preparation Example 2 to Preparation Example 10

Preparation Examples 2 to 10 were obtained by varying the type and mass ratio of monomers input on the basis of Preparation Example 1.

### Preparation of binder

### Example 1

The acrylate copolymer emulsion (containing 100 g of acrylate copolymer) from Preparation Example 1 was dispersed with 100 g of polypropylene particles having a volume particle size distribution Dv50 of 1 µm at a high speed for 60 min, stirred well followed by spray drying, to obtain a binder with a core-shell structure. Parameters of spray drying: inlet air temperature of 110°C and outlet air temperature of 50°C.

### Example 2 to Example 31

On the basis of Example 1, Examples 2 to 31 were obtained by adjusting the polymer type and mass ratio of the core structure and the shell structure, the volume particle size distribution Dv50 of the core structure, and the volume particle size distribution Dv50 of the binder.

### Comparative Example 1

On the basis of Example 1, Comparative Example 1 was obtained by adjusting the ratio of the mass of the shell structure to the mass of the core structure was adjusted to 1:0, that is, the core structure was omitted.

### Preparation of battery cell and battery

### 1. Preparation of separator

A commercially available PE microporous film (from Tricor Electronics) with a thickness of 7µm and an average pore diameter of 80nm was used as a substrate. The binder prepared as above was mixed in deionized water to obtain a slurry (solid content of 20%). The slurry was evenly applied to both surfaces of the substrate, dried to remove a solvent, where the coating composition was applied to the substrate at a density of 1.5 g/m², to obtain a separator.

### 2. Preparation of positive electrode plate

A positive electrode slurry was prepared by sufficiently stirring and uniformly mixing polyvinylidene fluoride (PVDF), lithium iron phosphate (LFP), a conductive agent carbon black and N-methylpyrrolidone (NMP) in a mass ratio of 1.2:58.38:0.42:40. The positive electrode slurry was evenly coated onto a positive electrode collector aluminum foil with a loading of 200 g/m², followed by oven drying, cold pressing and slitting, to obtain a positive electrode plate.

### 3. Preparation of negative electrode plate

Artificial graphite, a conductive agent acetylene black, a binder styrene-butadiene rubber (SBR) and a thickener sodium carboxymethyl cellulose (CMC-Na) were added to deionized water in a mass ratio of 96.2:1.0:1.6:1.2, stirred sufficiently and mixed uniformly to obtain a negative electrode slurry (solid content of 63%). The negative electrode slurry was coated on a negative electrode collector copper foil with a loading of 98 g/m², followed by oven drying, cold pressing and slitting, to obtain a negative electrode plate.

### 4. Preparation of electrolyte solution

Ethylene carbonate (EC), ethyl methyl carbonate (EMC), and diethyl carbonate (DEC) were mixed in a volume ratio of 1:1:1 at 25°C to obtain a mixed solvent, and then LiPF₆ was uniformly dissolved in the above mixed solvent to obtain an electrolyte solution, where LiPF₆ had a concentration of 1 mol/L.

### 5. Preparation of secondary battery

The positive electrode plate, the separator and the negative electrode plate were stacked and wound in sequence, were shaped by cold pressing (during which the separator was bonded to the electrode plates) to obtain a battery cell; the battery cell was placed in an outer package, the electrolyte solution prepared above was added, followed by processes such encapsulating, standing, forming and aging, to obtain a secondary battery.

### Performance Test

### 1. Cold-pressing bonding:

The negative electrode plate and the separator were stacked together and placed on a hot press with parameters set as: temperature of 25°C, pressure of 10t and time of 30s to produce a bonded separator/positive electrode plate sample by pressing; and the separator/negative electrode plate sample was cut into a rectangular sample strip of 150mm × 20mm. A test specimen was made by adhering one side of the electrode plate of the rectangular sample strip to a steel plate by double-sided tape, the separator was separated from the electrode plate by 2cm in a length direction at one end of the rectangular sample strip.

The steel plate was held horizontal and fixed with a lower fixture of universal testing machine (CTM2100, Xieqiang Instrument Manufacturing (Shanghai) Co., Ltd.). A release end of the separator as described above was fixed with an upper fixture of the universal testing machine and connected to a tensile machine. The testing conditions were set as a stretch rate of 20 mm/min and a horizontal pull of 10 cm. After a tensile force was stabilized, a tensile force value was recorded, and according to a ratio of the tensile force value to a width of the sample, a bonding force between the separator and the electrode plate was obtained.

### 2. Hardness of battery cell:

A battery cell was placed on a table with both ends horizontal, the middle hollow part was fixed at a width of 12cm, the battery cell was placed flat naturally, and the hardness of the battery cell was tested by measuring the deviation of the centre of the battery cell from the horizontal datum line.

### 3. EIS data:

A CHI660D electrochemical workstation from Shanghai Chenhua Instruments Co., Ltd was used. A sinusoidal voltage signal with a small amplitude of frequency W1 was applied to a battery system, and the system would generate a sinusoidal current response with a frequency W2. A change in the ratio of an excitation voltage to a response current was an impedance spectrum of an electrochemical system. In an AC impedance test, the test frequency ranged from 10 mHz to 100 kHz with an amplitude of 5 mV. Information on the real and image parts of the impedance at different frequencies was obtained through the test.

### 4. Cycling performance of lithium-ion battery:

A LAND battery test system was used. The prepared battery was charged to 3.65 V at a constant current of 1/3 C at 25°C, then charged to a current of 0.05 C at a constant voltage of 3.65 V, followed by standing for 5 min, then discharged to 2.5 V at 1/3 C, where the resulting discharged capacity was denoted as an initial capacity C0. The above steps were repeated for the same battery and the discharge capacity Cn of the battery after the 500th cycle was recorded. The battery capacity retention rate after each cycle is Pn=(Cn/C0)×100%. That is, the difference in cycling performance can be reflected by the battery capacity retention rate at a specific number of cycles.

**Table 1 Preparation parameters of acrylate copolymer emulsion**

| Serial Number | Acrylate monomer | Acrylonitrile monomer | Acrylamide monomer | Mass ratio |
|---|---|---|---|---|
| Preparation Example 1 | Ethyl acrylate | Acrylonitrile | N-Hydroxymethylacr ylamide | 1:0.01:0.08 |
| Preparation Example 2 | Ethyl acrylate | Acrylonitrile | N-Hydroxymethylacr ylamide | 1:0.1:0.08 |
| Preparation Example 3 | Ethyl acrylate | Acrylonitrile | N-Hydroxymethylacr ylamide | 1:0.3:0.08 |
| Preparation Example 4 | Ethyl acrylate | Acrylonitrile | N-Hydroxymethylacr ylamide | 1:0.6:0.08 |
| Preparation Example 5 | Ethyl acrylate | Acrylonitrile | N-Hydroxymethylacr ylamide | 1:0.8:0.08 |
| Preparation Example 6 | 2-Ethylhexyl acrylate | Methacrylonitrile | Acrylamide | 1:0.3:0.01 |
| Preparation Example 7 | 2-Ethylhexyl Acrylate | Methacrylonitrile | Acrylamide | 1:0.3:0.06 |
| Preparation Example 8 | 2-Ethylhexyl acrylate | Methacrylonitrile | Acrylamide | 1:0.3:0.10 |
| Preparation Example 9 | 2-Ethylhexyl acrylate | Methacrylonitrile | Acrylamide | 1:0.3:0.12 |
| Preparation Example 10 | 2-Ethylhexyl Acrylate | Methacrylonitrile | Acrylamide | 1:0.3:0.15 |

**Table 2 Binder preparation parameters**

| Serial Number | Shell layer (acrylate copolymer) | Core layer (rigid polymer) | Crystal linity of rigid polyme r% | Rigid polymer particle size Dv50 (µm) | Mass ratio of shell layer to core layer | Binder particle size Dv50 (µm) | Cold pressing bonding force (N/m) | Battery cell center deviation (mm) | EIS data (Ω) | Battery cycling performance (%) |
|---|---|---|---|---|---|---|---|---|---|---|
| Example 1 | Preparation Example 2 | Polyprop ylene | 40 | 1 | 1:1 | 7 | 17.51 | 0 | 1.21 8 | 98.0 |
| Example 2 | Preparation Example 6 | Polyprop ylene | 40 | 1 | 1:1 | 7 | 14.62 | 0 | 1.40 2 | 96.1 |
| Example 3 | Preparation Example 9 | Polyprop ylene | 40 | 1 | 1:1 | 7 | 16.06 | 0 | 1.26 3 | 97.2 |
| Example 4 | Preparation Example 2 | Polystyre ne | 55 | 1 | 1:1 | 7 | 14.87 | 0 | 1.38 2 | 96.3 |
| Example 5 | Preparation Example 2 | Polymeth yl methacry late | 94 | 1 | 1:1 | 7 | 15.67 | 0 | 1.32 1 | 96.6 |
| Example 6 | Preparation Example 2 | Polyamid e | 32 | 1 | 1:1 | 7 | 16.32 | 0 | 1.22 1 | 97.5 |
| Example 7 | Preparation Example 2 | Polyprop ylene | 40 | 0.01 | 1:1 | 7 | 6.42 | 4 | 1.67 5 | 93.0 |
| Example 8 | Preparation Example 2 | Polyprop ylene | 40 | 0.1 | 1:1 | 7 | 11.05 | 0 | 1.45 | 95.2 |
| Example 9 | Preparation Example 2 | Polyprop ylene | 40 | 0.5 | 1:1 | 7 | 12.36 | 0 | 1.43 7 | 95.4 |
| Example 10 | Preparation Example 2 | Polyprop ylene | 40 | 0.8 | 1:1 | 7 | 14.63 | 0 | 1.38 9 | 96.1 |
| Example 11 | Preparation Example 2 | Polyprop ylene | 40 | 2 | 1:1 | 7 | 13.52 | 0 | 1.42 7 | 95.7 |
| Example 12 | Preparation Example 2 | Polyprop ylene | 40 | 5 | 1:1 | 7 | 1081 | 0 | 1.45 4 | 95.2 |
| Example 13 | Preparation Example 2 | Polyprop ylene | 40 | 10 | 1:1 | 7 | 7.61 | 3 | 1.60 1 | 93.7 |
| Example 14 | Preparation Example 6 | Polyprop ylene | 40 | 1 | 1:0.1 | 7 | 9.63 | 0 | 1.51 2 | 94.8 |
| Example 15 | Preparation Example 6 | Polyprop ylene | 40 | 1 | 1:5 | 7 | 10.51 | 0 | 1.50 2 | 95.1 |
| Example 16 | Preparation Example 6 | Polyprop ylene | 40 | 1 | 1:10 | 7 | 8.81 | 0 | 1.57 2 | 94.3 |
| Example 17 | Preparation Example 6 | Polyprop ylene | 40 | 1 | 1:20 | 7 | 3.53 | 8 | 1.76 6 | 92.1 |
| Example 18 | Preparation Example 9 | Polyprop ylene | 40 | 1 | 1:1 | 0.5 | 6.48 | 4 | 1.62 5 | 932 |
| Example 19 | Preparation Example 9 | Polyprop ylene | 40 | 1 | 1:1 | 1 | 12.75 | 0 | 1.43 6 | 95.4 |
| Example 20 | Preparation Example 9 | Polyprop ylene | 40 | 1 | 1:1 | 10 | 13.72 | 0 | 1.41 7 | 96.0 |
| Example 21 | Preparation Example 9 | Polyprop ylene | 40 | 1 | 1:1 | 12 | 11.37 | 0 | 1.45 0 | 95.2 |
| Example 22 | Preparation Example 9 | Polyprop ylene | 40 | 1 | 1:1 | 15 | 9.32 | 0 | 1.54 8 | 94.6 |
| Example 23 | Preparation Example 9 | Polyprop ylene | 40 | 1 | 1:1 | 20 | 3.54 | 8 | 1.73 2 | 92.7 |
| Example 24 | Preparation Example 1 | Polyprop ylene | 40 | 1 | 1:1 | 7 | 15.27 | 0 | 1.38 0 | 96.5 |
| Example 25 | Preparation Example 3 | Polyprop ylene | 40 | 1 | 1:1 | 7 | 16.45 | 0 | 1.22 0 | 97.8 |
| Example 26 | Preparation Example 4 | Polyprop ylene | 40 | 1 | 1:1 | 7 | 12.15 | 0 | 1.44 1 | 95.4 |
| Example 27 | Preparation Example 5 | Polyprop ylene | 40 | 1 | 1:1 | 7 | 11.72 | 0 | 1.44 9 | 95.2 |
| Example 28 | Preparation Example 7 | Polyprop ylene | 40 | 1 | 1:1 | 7 | 15.76 | 0 | 1.30 6 | 97 |
| Example 29 | Preparation Example 8 | Polyprop ylene | 40 | 1 | 1:1 | 7 | 16.41 | 0 | 1.22 1 | 97.8 |
| Example 30 | Preparation Example 10 | Polyprop ylene | 40 | 1 | 1:1 | 7 | 15.41 | 0 | 1.37 6 | 96.6 |
| Example 31 | Preparation Example 10 | Polyethyl one | 50 | 1 | 1:1 | 7 | 15.31 | 0 | 1.37 8 | 96.5 |
| Comparative Example 1 | Preparation Example 6 | / | / | 1 | 1:0 | 7 | 2.81 | 10 | 2.15 2 | 85.6 |

As can be seen from the above data, the application of the binder with the shell structure of an acrylate copolymer and the core structure of a rigid polymer to the battery increases the hardness of the battery cell while improving the cold pressing bonding force to the battery cell, helping to reduce electrochemical impedance and improving cycling performance of the secondary battery.

The foregoing descriptions are merely some preferred embodiments of the present application, but are not intended to limit the patent scope of the present application. Any equivalent structural transformations or equivalent process transformations made under the application concept of the present application by using the content of the specification and accompanying drawings, or direct/indirect application of the content of the specification and accompanying drawings to other related technical fields should fall within the patent protection scope of the present application.

## Claims

1. A binder for secondary batteries, wherein the binder comprises a core structure and a shell structure disposed on a surface of the core structure, the shell structure comprises an acrylate copolymer, the core structure comprises a rigid polymer, and the rigid polymer has a crystallinity ranging from 32% to 94%.

2. The binder for secondary batteries according to claim 1, wherein the rigid polymer has a crystallinity ranging from 40% to 80%.

3. The binder for secondary batteries according to claim 1 or 2, wherein the rigid polymer comprises at least one of polyethylene, polypropylene, polystyrene, polymethyl methacrylate, and polyamide.

4. The binder for secondary batteries according to any one of claims 1 to 3, wherein the shape of the binder comprises a spherical shape.

5. The binder for secondary batteries according to any one of claims 1 to 4, wherein the binder has a volume particle size distribution Dv50 of 1 µm to 15 µm, and preferably, the binder has a volume particle size distribution Dv50 of 1 µm to 12 µm.

6. The binder for secondary batteries according to any one of claims 1 to 5, wherein a ratio of a volume particle size distribution Dv50 of the acrylate copolymer to a volume particle size distribution Dv50 of the rigid polymer is 1 :(1-50).

7. The binder for secondary batteries according to claim 6, wherein the rigid polymer has a volume particle size distribution Dv50 of 0.1 µm to 5 µm, and preferably, the rigid polymer has a volume particle size distribution Dv50 of 0.5 µm to 2 µm;
and/or, the acrylate copolymer has a volume particle size distribution Dv50 of 100 nm to 200 nm, and preferably, the acrylate copolymer has a volume particle size distribution Dv50 of 130 nm to 180 nm.

8. The binder for secondary batteries according to any one of claims 1 to 7, wherein a ratio of mass of the shell structure to mass of the core structure is 1:(0.1-10), and preferably, a ratio of mass of the shell structure to mass of the core structure is 1:(0.1-5).

9. The binder for secondary batteries according to any one of claims 1 to 8, wherein the acrylate copolymer comprises at least two of an acrylate monomer, an acrylonitrile monomer and an acrylamide monomer as constituent monomers.

10. The binder for secondary batteries according to claim 9, wherein the acrylate monomer comprises at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobomyl methacrylate, lauryl methacrylate, 2-hydroxyethyl methacrylate, and 2-hydroxypropyl methacrylate;
and/or, the acrylonitrile monomer comprises at least one of acrylonitrile or methacrylonitrile; and/or, the acrylamide monomer comprises at least one of acrylamide, N-hydroxymethylacrylamide and N-butoxymethylacrylamide.

11. The binder for secondary batteries according to any one of claims 1 to 10, wherein the acrylate copolymer comprises an acrylate monomer, an acrylonitrile monomer and an acrylamide monomer as constituent monomers, the acrylate monomer, the acrylonitrile monomer and the acrylamide monomer have a mass ratio of 1:(0.01-0.8):(0.01-0.15), and preferably, the acrylate monomer, the acrylonitrile monomer and the acrylamide monomer have a mass ratio of 1:(0.1-0.6):(0.06-0.12).

12. A preparation method of a binder for secondary batteries according to any one of claims 1 to 11, comprising:
preparing an acrylate copolymer emulsion; and
blending the acrylate copolymer emulsion with a rigid polymer and performing spray drying to obtain a binder with a core-shell structure.

13. The preparation method of a binder for secondary batteries according to claim 12, wherein the step of preparing an acrylate copolymer emulsion comprises:
stirring and emulsifying water, an emulsifier and constituent monomers of the acrylate copolymer to obtain a pre-emulsion of monomers; and
stirring the emulsifier and the water to emulsify, adding the pre-emulsion and an initiator under a heating condition, and raising the temperature to obtain the acrylate copolymer emulsion.

14. A separator, wherein the separator comprises a base film and a binder layer disposed on at least one side of the base film, the binder layer comprises the binder for secondary batteries according to any one of claims 1 to 11;
or the binder layer comprises a binder prepared by the preparation method of a binder for secondary batteries according to claim 12 or 13.

15. A secondary battery, comprising the separator according to claim 14.

16. An electrical apparatus, comprising the secondary battery according to claim 15.
